# EUROPÄISCHE PATENTSCHRIFT

(11) **EP 3 225 376 B1**
(45) Veröffentlichungstag und Bekanntmachung des Hinweises auf die Patenterteilung: **02.09.2020**
(21) Anmeldenummer: 16162762.5
(22) Anmeldetag: 30.03.2016
(51) Int. Cl.: B29C 45/14, B41M 5/24

(54) **KUNSTSTOFFFORMTEIL MIT SCHWARZ- BZW. GRAUER UV-MARKIERUNG, VERFAHREN ZUR HERSTELLUNG EINER MARKIERUNG DES KUNSTSTOFFFORMTEILS SOWIE IN-MOULD-FOLIE**
PLASTIC MOULDED PART WITH BLACK OR GREY UV MARKING, METHOD FOR PRODUCING A MARK ON THE PLASTIC MOULDED PART AND IN-MOULD FILM
PIECE DE FORMAGE EN PLASTIQUE{J}PRESENTANT UN MARQUAGE UV NOIR OU GRIS, PROCEDE DE FABRICATION D'UN MARQUAGE POUR LA PIECE DE FORMAGE EN PLASTIQUE ET FILM MOULE

(43) Veröffentlichungstag der Anmeldung: 04.10.2017
(73) Patentinhaber: Wirthwein AG, 97993 Creglingen (DE)
(72) Erfinder: WIRTHWEIN, Marcus, 97993 Creglingen (DE); SÖVER, Alexandru, 97993 Creglingen (DE)
(74) Vertreter: Stippl, Hubert

(56) Entgegenhaltungen:
- EP-A2- 0 190 997
- WO-A1-2017/167651
- DE-A1-102010 035 890
- US-A1- 2003 084 521
- US-A1- 2008 213 541
- US-A1- 2012 103 545
- US-A1- 2013 258 034

## Beschreibung

Die vorliegende Erfindung betrifft ein Kunststoffformteil gemäß dem Oberbegriff des Anspruchs 1. Des Weiteren betrifft die vorliegende Erfindung ein Verfahren zur Herstellung eines Kunststoffformteils gemäß Anspruch 8 bzw. 9.

### Technologischer Hintergrund

Kunststoff ist im täglichen Leben weit verbreitet und findet seine Anwendung in Haushaltsgeräten, Gegenständen des täglichen Bedarfs, Verpackung, Teilen von Automobilen sowie als innere Komponenten von Gegenständen und Geräten unterschiedlichster Art. Entsprechende Kunststoffteile sind üblicherweise mit Farbpimenten, zum Beispiel TiO2 für weiße Teile wie etwa Blenden für Waschmaschinen usw., versehen.

Die Oberfläche von Gegenständen bzw. Geräten aus Kunststoff werden häufig mit Markierungen versehen. Derartige Markierungen dienen unterschiedlichsten Zwecken. Beispielsweise werden Gegenstände markiert, um deren Verfolgbarkeit, insbesondere in der Einhaltung von ISO-Qualitätsstandards sicherzustellen. Die Markierung von Gegenständen aus Kunststoffen dient häufig auch dazu, im Sichtbereich eines Geräts Informationen an Bedienelementen, zum Beispiel an Drehknöpfen, Schaltern, Kipphebeln und dergleichen vorzusehen.

Zur Markierung von Kunststoffen gibt es vielfältige Methoden. Kunststoffe können zur Markierung mechanisch bearbeitet, zum Beispiel geritzt, oder thermisch bearbeitet, zum Beispiel heißgeprägt, werden, um eine Markierung in der Oberfläche des Kunststoffbauteils vorzusehen. Entsprechende Markierungen können auch mittels eines Lasers in die Oberfläche des Kunststoffbauteils oder des Gegenstands aus Kunststoff eingebracht werden. Hierbei wird der mit dem Laser beaufschlagte Oberflächenbereich zerstört und hierdurch die Markierung erzeugt. Solche Markierungen werden üblicherweise zum Aufbringen von Haltbarkeitsdaten (wie beispielsweise auf Joghurtbecher) und/oder Seriennummern aufgebracht. Aber auch Bedienteile, wie zum Beispiel Drehknöpfe von Waschmaschinen oder dergleichen, können dementsprechend markiert werden. Das Problem derartiger Markierungen besteht allerdings in der mangelnden Präzision sowie geringen Oberflächengüte. Bei Gegenständen des täglichen Bedarfs werden heutzutage höchste Anforderungen an deren Oberflächengüte gestellt. Da es sich um eine Zerstörung der Bauteiloberfläche handelt, führt diese Art von Markierung auch dazu, dass sich Schmutzpartikel im Bereich der Markierung ansammeln können, was die Ästhetik negativ beeinträchtigt. Für einen Gebrauchsgegenstand, wie zum Beispiel ein Bedienpanel einer Waschmaschine, ist eine derartige Markierung eher ungeeignet.

Eine Markierung von Kunststoffen kann durch das Einkoppeln von Laserlicht erfolgen, wobei der Energieeintrag durch den Laser zur Carbonisierung oder zum Aufschäumen eines Polymers führt, welches eine farbige Veränderung zur Folge hat. Hierzu werden Nd:YAG-Laser eingesetzt. Aufgrund der hohen Energie des Lasers führt diese Art von Lasermarkierung allerdings ebenfalls zu einer negativen Beeinträchtigung der Oberfläche des Kunststoffbauteils.

Eine farbige Markierung von Kunststoffteilen mittels Laser kann auch in Transfertechnik durch den Einsatz von Transferfolien vorgenommen werden. Hierbei wird eine Transferfolie auf der Oberfläche des Kunststoffbauteils positioniert. Mit Laserenergie wird hierbei das Markierungsmaterial von der Folie auf die Oberfläche des Kunststoffbauteils übertragen und verbindet diese dauerhaft miteinander. Hierdurch können Kunststoffteile vor allem auch nachträglich gekennzeichnet werden. Das Verfahren ist allerdings sehr aufwendig. Darüber hinaus ist diese farbige Lasermarkierung bei einem dauerhaften Einsatz nicht vor einer Verschlechterung des Erscheinungsbildes wegen mechanischer Beeinträchtigung geschützt. Auch gewährleistet diese Art der Farbmarkierung lediglich eine geringe Oberflächengüte.

### Nächstliegender Stand der Technik

Aus der DE 10 2006 036 367 A1 ist ein Verfahren zur Farbmarkierung von Gerätegehäusen bekannt. Das Gerätegehäuse besteht hierbei aus zwei Gerätegehäuseteilen, wobei das an der Außenseite befindliche Gerätegehäuseteil transparent ausgeführt ist und an seiner dem inneren Gerätegehäuseteil zugewandten Seite eine zum Beispiel im Siebdruck aufgebrachte Druckschicht aufweist. Das weitere, nicht transparente Gerätegehäuseteil wird hinterspritzt oder auf die Innenseite des transparenten Gerätegehäuseteils aufgeklebt, so dass sich die Druckschicht dazwischen befindet. Nach der Fertigmontage wird mittels eines Beschriftungslasers eine Beschriftung in die Druckschicht eingebracht, die zu einer lokalen Veränderung der Farbe oder zu einem lokalen Entfernen der Farbe in der Druckschicht und damit zu der gewünschten Markierung führt.

Aus der DE 10 2005 006 074 A1 ist eine Mehrschichtfolie zum Hinterspritzen mit einem flüssigen Kunststoff in einem In-Mould-Verfahren zur Herstellung eines dekorierten Spritzgussartikels hoher optischer Qualität und Gebrauchstüchtigkeit bekannt. Die Mehrschichtfolie weist mindestens eine strahlungsgehärtete Replizierlackschicht auf, die mindestens auf einer ihrer Oberflächen eine einen visuell wahrnehmbaren und/oder technischen Effekt erzeugende räumliche Struktur aufweist, wobei an mindestens einer Oberfläche mit räumlicher Struktur angrenzend zumindest bereichsweise eine Kontrastschicht angeordnet ist. Die Mehrschichtfolie kann eine mit Laser eingebrachte Markierung, insbesondere in Form von alphanumerischen Zeichen, geometrischen Mustern oder bildlichen Darstellungen aufweisen.

Die DE 10 2010 035 890 A1 betrifft Verfahren zur Herstellung eines Sicherheitsdokuments. Der Erfindung liegt die Idee zugrunde, mindestens eine Folie aus einem Kunststoffmaterial so herzustellen, dass mindestens eine Oberfläche Kavitäten zum Aufnehmen einer für die Bedruckung verwendeten Tinte erhält. Ein entsprechendes Sicherheitsdokument zeichnet sich dadurch aus, dass die aufgedruckte Tinte im Wesentlichen in Kavitäten angeordnet ist, die in der die mindestens eine Kunststoffschicht bildenden Folie ausgebildet sind. Die Folie kann mit einer oder mehreren weiteren Folien zu einem Dokumentenkörper mittels eines Laminierverfahrens zusammengefügt werden.

Aus der EP 0 190 997 A2 ist ein Verfahren zur Beschriftung von hochmolekularem organischem Material, z. B. Polystyrol, mit mindestens einem strahlungsempfindlichen, eine Verfärbung verursachenden Zusatzstoff bekannt, bei dem als Energiestrahlung Laserlicht, dessen Wellenlänge im nahen UV-Beriech liegt, und als Zusatzstoff TiO2-Pigmente verwendet werden.

Die US 2012/0103545 beschreibt ein lasermarkierbares Kunststoff-Substrat, welches mindesten ein Material, das bei Laserbestrahlung eine Farbmarkierung bewirkt, sowie einen Manipulationssicherungs-Stoff aufweist, der bei einem Versuch die Markierung chemisch zu entfernen eine sichtbare Einfärbung bewirkt. Als Laser kann unter anderem ein UV-Laser zum Einsatz kommen, ei dem lasersensitiven Material handelt es sich um Glimmer, Molybdat, Wolframat und Vanadat.

Ferner ist aus der US 2013/0258034 A1 ein In-Mould Dekorationsverfahren unter Herstellung mehrerer Dekorationsschichten bekannt, bei dem mittels einer Laseranordnung jeweils sich voneinander unterscheidende Muster in die einzelnen Dekorationsschichten geschnitten werden. Ferner kann die Laseranordnung dazu verwendet werden, eine Information wie z. B. eine Produktidentifizierung oder einen Registrierungscode auf eine Dekorationsschicht aufzubrennen.

### Aufgabe der vorliegenden Erfindung

Die Aufgabe der vorliegenden Erfindung besteht darin, ein neuartiges Kunststoffformteil zur Verfügung zu stellen, welches bei vereinfachter Herstellbarkeit eine dauerhafte Schwarz- oder Graustufenmarkierung sowie eine besonders gute Oberflächengüte gewährleistet. Ferner soll ein Verfahren zur Herstellung eines entsprechenden Kunststoffformteils zur Verfügung gestellt werden.

### Lösung der Aufgabe

Die vorstehende Aufgabe wird durch ein Kunststoffformteil mit den Merkmalen des Anspruchs 1 sowie durch ein Verfahren mit den Merkmalen des Anspruchs 8 bzw. 9 gelöst.

Zweckmäßige Ausgestaltungen des erfindungsgemäßen Kunststoffformteils bzw. Verfahrens zu dessen Herstellung sind in den Unteransprüchen beansprucht.

Erfindungsgemäß ist gemäß einer ersten Alternative der Erfindung als Oberflächenschicht eine sogenannte In-Mould-Schicht in Form einer In-Mould-Folie vorgesehen, innerhalb deren farbloses oder amorphes Grundmaterials TiO2-Pigmente fein verteilt vorliegen. Hierdurch wird der Herstellungsprozess im Vergleich zum eingangs genannten Stand der Technik erheblich vereinfacht, da ein zusätzlicher Verfahrensschritt zum Bedrucken des äußeren Gehäuseteils, wie er beim Stand der Technik vorgesehen ist, entfällt. Es entfällt somit eine weitere Fügeschicht zwischen Grundkörper und Oberflächenschicht. Dadurch, dass sich die TiO2-Pigmente innerhalb des Grundmaterials der mit einer begrenzten Schichttiefe versehenen Oberflächenschicht befinden, wird eine begrenzte, exakt definierte Schichtdicke an TiO2-Pigmenten in dem Kunststoffformteil realisiert. Überraschenderweise hat sich herausgestellt, dass hierdurch eine Schwarz- oder Graustufenmarkierung mit Tiefenwirkung von besonders hoher Qualität erzielbar ist.

Erfindungsgemäß ist gemäß einer zweiten Alternative der Erfindung als Oberflächenschicht eine In-Mould-Folie als In-Mould-Schicht vorgesehen, innerhalb deren Grundmaterials keine Pigmente vorliegen. Die In-Mould-Schicht dient aber als Transmissionsschicht für einen UV-Laserlichtstrahl, mit dem der Grundkörper selektiv bestrahlt wird und dies eine die Dekoration bedingende, auf den Bereich der selektiven Bestrahlung des Grundkörpers begrenzte schwarze und/oder graue Markierung bewirkt.

Aufgrund der Erfindung ist bei beiden Alternativen die Schwarz- oder Graustufenmarkierung vor allem auch bei dauerhaftem Einsatz und mechanischer Beanspruchung vor Degradation sicher, da sich die Markierung entweder im Wesentlichen über die Schichtdicke der In-Mould-Schicht erstreckt oder sich unterhalb der Oberflächenschicht im Grundkörper befindet. Zudem ergibt sich in beiden Fällen eine sehr gute Tiefenwirkung der Markierung. Aufgrund der Aktivierung des Farbumschlags mittels UV-Laserlicht wird, im Gegensatz zu herkömmlichen Lasermarkierungen, in beiden Fällen die Oberfläche des Kunststoffteils nicht beschädigt. Dies ermöglicht eine hervorragende Oberflächenqualität. Die Erfindung ermöglicht es, die Oberflächenschicht bei Bedarf sogar als vorgeformte 3D-Schicht bereitzustellen und mit Kunststoff zu einem fertigen Kunststoffformteil zu hinterspritzen.

Sofern die Pigmente gemäß der ersten Alternative in dem Grundmaterial der Oberflächenschicht bzw. der In-Mould-Folie vorhanden sind, sind sie dort fein verteilt angeordnet. Die Markierung kann in diesem Fall über die Schichtstärke der In-Mould-Folie, vorzugsweise über deren gesamte Schichtstärke, in dem Kunststoffformteil bewirkt werden. Die Markierung besitzt eine gute Tiefenwirkung bei guter mechanischer Beständigkeit.

Dadurch, dass die Oberflächenschicht farblos oder amorph ist, ergibt sich keine Kontrastbildung beim Übergang des Grundkörpers zu den nicht belichteten Bereichen der Oberflächenschicht und es kann ein einheitliches Erscheinungsbild erzielt werden. Zudem wird bei der zweiten Alternative der Durchtritt des UV-Laserlichtstrahls nicht behindert.

Erfindungsgemäß handelt es sich bei der Oberflächenschicht oder zumindest bei dessen Grundmaterial um Polystyrol oder um ein Copolymer auf Styrolbasis. Diese Materialien sind transparent, besitzen eine geringe Schwindungs- und Schrumpfungsneigung und sind daher besonders gut in Kombination für einen Einsatz zusammen mit Pigmenten geeignet.

TiO2-Pigmente bieten eine ganz besonders gute Verarbeitbarkeit in Zusammenhang mit dem Einsatz einer In-Mould-Oberflächenschicht. Des Weiteren entsprechen sie den Farbpigmenten im Grundkörper, der aufgrund der üblichen Weißfärbung üblicherweise mit TiO2-Pigmenten versetzt ist, so dass eine ideale Farbabstimmung der Oberflächenschicht mit dem Grundkörper erfolgen kann. Zudem bewirken sie bei Einwirkung von UV-Laserlicht einen sehr guten Kontrast des aufgrund der Einwirkung von UV-Laserlichts sich aufgrund eines Verbrennens/Verkohlens schwarz verfärbenden Bereichs des Grundmaterials der Oberflächenschicht.

Wenn das Material des Grundkörpers mit TiO2-Pigmenten versetzt ist, wird das weiße Erscheinungsbild des Grundkörpers durch die vollständig oder lediglich in Teilbereichen an der Außenseite befindliche transparente Oberflächenschicht nicht beeinträchtigt.

Vorzugsweise befindet sich eine Hauptfläche der Oberflächenschicht an der Außenseite des Kunststoffformteils.

Zweckmäßigerweise kann die Oberflächenschicht nur über einen Teilbereich der außenseitigen Oberfläche des Kunststoffformteils vorliegen. Demzufolge kann die In-Mould-Schicht lediglich auf den zu markierenden Oberflächenbereich begrenzt werden. Auch kann gemäß einer weiteren zweckmäßigen Ausgestaltung eine nahtlose, durchgehend bündige Oberfläche hergestellt und damit eine einheitliche Optik geschaffen werden.

Zweckmäßigerweise sind die Pigmente in feiner Verteilung in dem Grundmaterial der Oberflächenschicht bzw. dem Grundmaterial des Grundkörpers untergebracht.

Besonders vorteilhaft ist es, wenn es sich bei der Oberflächenschicht oder zumindest bei dessen Grundmaterial um SAN (Styrol-Acrylnitril-Copolymer) handelt. Dieses Material ist transparent und besitzt eine hohe Brillanz. Ferner ist es sehr resistent gegen mechanische Beeinträchtigung sowie gegen eine oberflächliche Zerstörung durch das UV-Laserlicht. Zudem gewährleistet es als In-Mould-Folie eine sehr gute Verbindbarkeit mit ABS. Letzteres wird sehr häufig als Blendenmaterial für Haushaltsgeräte wie z. B. Waschmaschinen oder Geschirrspülmaschinen verwendet. Es eignet sich daher besonders für ein Einbringen einer Markierung am Grundkörper.

Besonders gute Kontrast Ergebnisse werden erzielt, wenn der Pigmentanteil der Oberflächenschicht in Bezug auf die Folie in einem Bereich von 0,3 - 10 Gewichts-%, vorzugsweise von 0,5 - 7 Gewichts-%, besonders vorzugsweise von 1,0 Gewichts-% liegt.

Der Pigmentanteil im Grundmaterial des Grundkörpers liegt zwischen 1 und 5 Gewichts-%.

Besonders gute Farbmarkierungsergebnisse können erzielt werden, wenn die Oberflächenschicht eine Stärke im Bereich von 0,05 mm bis 1,0 mm, vorzugsweise im Bereich von 0,05 mm bis 0,5 mm, besonders vorzugsweise im Bereich von 0,05 mm bis 0,1 mm, aufweist.

Die vorliegende Erfindung betrifft des Weiteren, auch nebengeordnet beansprucht, jeweils ein Verfahren zur Herstellung eines Kunststoffformteils gemäß den Merkmalen des Anspruchs 8 und 9. Dadurch, dass sich gemäß dem erfindungsgemäßen Verfahren Pigmente, vorzugsweise TiO2-Pigmente innerhalb der Oberflächenschicht befinden, die mit dem Grundkörper umspritzt wird, wird der Farbumschlag durch Verbrennen oder Verkohlen des Kunststoffs aufgrund der Energie des UV-Laserlichts lediglich auf die Oberflächenschicht begrenzt. Die Weiß-Pigmente bzw. TiO2-Pigmente dienen hierbei zur verbesserten Kontrastbildung in der Oberflächenschicht. Würde man demgegenüber den Grundkörper, der ebenfalls mit TiO2-Pigmenten wegen seiner Weißfärbung versehen ist, direkt an seiner Oberfläche mit UV-Laserlicht ohne Verwendung einer transparenten Oberflächenschicht bzw. In-Mould-Folie bestrahlen, würde dies zu schlechteren Markierungen und zu spürbaren Oberflächenbeschädigungen führen.

Vorzugsweise wir als Oberflächenschicht eine In-Mould-Folie eingesetzt. Diese bedingt somit eine exakt vorgegebene, geringe Schichttiefe, über die die Markierung eingebracht wird. Gleichzeitig bewirkt dies einen positiven Einfluss auf die Wirkung des UV-Laserlichts.

Für das Einbringen der Markierung wird vorzugsweise ein UV-Laser mit einer Wellenlänge von 355nm verwendet.

Die Pulsweite des Lasers liegt vorzugsweise im ps-Bereich. Vorzugsweise liegt die Pulsweite in einem Bereich von 200 ps bis 400 ps.

Die Wiederholungsrate liegt bei mindestens 300 kHz. Die Leistung des Lasers beträgt mindestens 0,2 W, vorzugsweise liegt sie in einem Bereich von 4 W bis 6W.

### Beschreibung der Erfindung anhand von Ausführungsbeispielen

Nachstehend wird die vorliegende Erfindung anhand von Ausführungsbeispielen näher erläutert. Es zeigen:
- Fig. 1: ein Beispiel eines erfindungsgemäßen Kunststoffformteils in Form einer Waschmaschinenblende;
- Fig. 2: eine Teilschnittdarstellung durch die Blende gemäß Fig. 1 im Bereich der Oberflächenschicht in stark vereinfachter Darstellungsweise,
- Fig. 3A: eine vergrößerte Darstellung eines Oberflächenbereichs der Blende während der Markierung mit UV-Laserlicht, wobei die Markierung innerhalb der Oberflächenschicht erzeugt wird,
- Fig. 3B: eine vergrößerte Darstellung eines Oberflächenbereichs der Blende während der Markierung mit UV-Laserlicht, wobei die Markierung unterhalb der Oberflächenschicht im Grundkörper erzeugt wird,
- Fig. 4A: ein Beispiel der In-Mould-Folienherstellung gemäß einer ersten Ausgestaltung der vorliegenden Erfindung,
- Fig. 4B: ein Beispiel der Herstellung des Kunststoffformteils gemäß der ersten Ausgestaltung der vorliegenden Erfindung,
- Fig. 4C: ein Beispiel der Markierung des Kunststoffformteils gemäß Fig. 4B,
- Fig. 5A: ein Beispiel der In-Mould-Folienherstellung gemäß einer zweiten Ausgestaltung der vorliegenden Erfindung,
- Fig. 5B: ein Beispiel der Herstellung des Kunststoffformteils gemäß der zweiten Ausgestaltung der vorliegenden Erfindung sowie
- Fig. 5C: ein Beispiel der Markierung des Kunststoffformteils gemäß Fig. 5B.

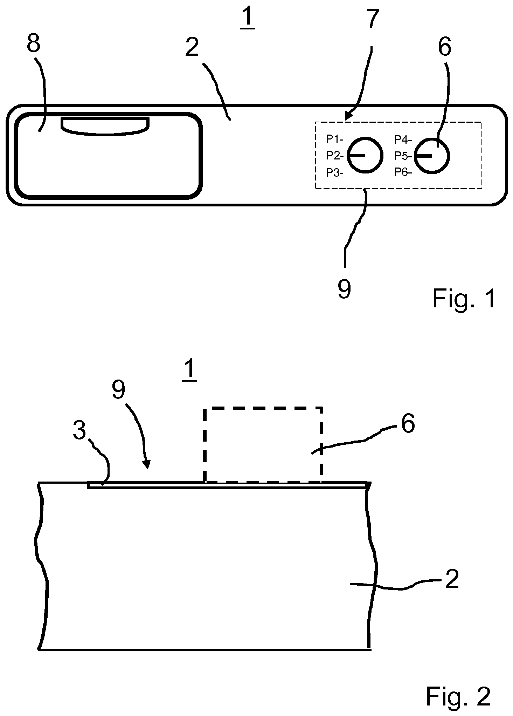

Bezugszeichen 1 in Fig. 1 bezeichnet ein erfindungsgemäßes Kunststoffformteil beispielsweise in Form einer Waschmaschinenbedienblende, die über Bedienelemente 6 in Form von Drehknöpfen sowie ein Waschmittelfach 8 verfügt. Im Bereich der Bedienelemente 6 sind schwarze Markierungen 7 in Form von Wählprogrammen P1-P6 vorgesehen. Das Kunststoffformteil 1 umfasst einen Grundkörper 2 aus Kunststoff sowie einen Dekorationsbereich 9, innerhalb dessen sich die Markierungen 7 befinden. Der Grundkörper 2 des Kunststoffformteils 1 besteht aus einem thermoplastischen amorphen Kunststoff, vorzugsweise aus ABS. Das Kunststoffmaterial des Grundkörpers 2 ist vorzugsweise mit weißen Pigmenten, vorzugsweise mit TiO2-Pigmenten, versetzt, sodass das Kunststoffformteil 1 eine weiße Farbe besitzt.

Wie aus Fig. 2 ersichtlich, handelt es sich bei dem Dekorationsbereich 9 um eine Oberflächenschicht 3, die an der Oberfläche des Kunststoffformteils 1 vorzugsweise nahtlos und bündig in die Oberfläche des Grundkörpers 2 übergeht. Insbesondere handelt es sich bei der Oberflächenschicht 3 um eine sogenannte In-Mould-Folie, die während der Herstellung des Kunststoffformteils 1 mit Kunststoffmaterial des Grundkörpers 2 umgeben bzw. in einer Spritzgießmaschine umspritzt wird.

Die Oberflächenschicht 3 ist im unmarkierten Bereich farblos oder milchig bzw. weiß, sodass sie in der Draufsicht des Kunststoffformteils 1 gemäß Fig. 1 in ihren Abmessungen nicht mit bloßem Auge erkennbar ist.

Erfindungsgemäß wird die Markierung 7 entweder lediglich über die Schichttiefe der Oberflächenschicht 3 bzw. In-Mould-Folie vorgenommen oder in den Oberflächenbereich des Grundmaterials des Grundkörpers eingebracht. In beiden Fällen hat die Markierung eine besonders vorteilhafte Tiefenwirkung.

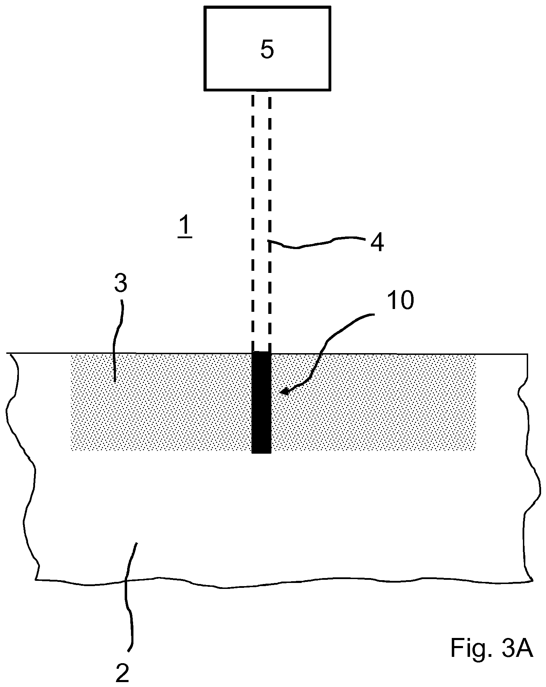

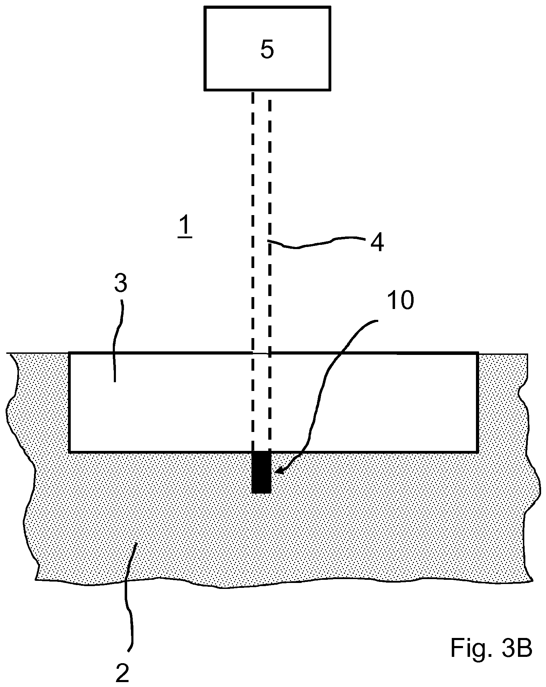

Fig. 3 zeigt in stark vereinfachter, vergrößerter Darstellungsweise die erste Alternative der vorliegenden Erfindung nämlich das Erzeugen der Markierung 7 in die Oberflächenschicht 3. Bei der Oberflächenschicht handelt es sich vorzugsweise um Polystyrol (PS). PS ist transparent und besitzt eine hohe Brillanz. Ferner ist es sehr resistent gegen mechanische Beeinträchtigung. Zudem gewährleistet es als In-Mould-Folie eine sehr gute Verbindbarkeit mit ABS. Letzteres wird sehr häufig als Blendenmaterial für Haushaltsgeräte wie z. B. Waschmaschinen oder Geschirrspülmaschinen verwendet.

Die Oberflächenschicht 3 beinhaltet über deren Gesamtschichttiefe gleichmäßig verteilte Pigmente, die einen sehr guten Kontrast des aufgrund der Einwirkung von UV-Laserlicht 4 eines UV-Lasers 5 lokal begrenzten, selektiven Farbumschlags 10 aufgrund Verbrennung oder Verkohlen des Kunststoffs bewirken. Dieser Farbumschlag 10 erstreckt sich über die gesamte Tiefe der Oberflächenschicht 3. Aufgrund der festgelegten Schichttiefe der Oberflächenschicht 3 und des Umspritzens mit Kunststoffmaterial des Grundkörpers 2 liegt somit eine exakt definierte, zugleich aber begrenzte Schichtdicke innerhalb des gesamten Kunststoffformteils 1 vor, die mit einer Markierung versehen ist. Insofern ergeben sich hierdurch für den großtechnischen Produktionsvorgang sehr gut reproduzierbare Bedingungen.

Vorzugsweise befindet sich die eine Hauptfläche der Oberflächenschicht 3 an der Außenseite des Kunststoffformteils 1 und bildet mit dem Grundkörper 2 des Kunststoffformteils 1 eine nahtlose, bündige, ebene Oberfläche und gleichzeitig einen äußerst wirksamen Schutz vor mechanischer Beeinträchtigung.

Untersuchungen haben ergeben, dass im Rahmen des Einsatzes einer Oberflächenschicht 3 in Form einer In-Mould-Schicht bzw. In-Mould-Folie der Einsatz von TiO2-Pigmenten überraschenderweise die Herstellung von Markierungen mit besonders gutem, sehr kontrastreichem Schwarzton mittels Bestrahlung mit UV-Laserlicht erzielbar ist.

Was den Anteil an TiO2-Pigmenten in Bezug auf die Oberflächenschicht 3 anbelangt, so liegt dieser in einem Bereich von 0,3 - 10 Gewichts-%, vorzugsweise von 0,5 - 7 Gewichts-%, besonders vorzugsweise von 1,0Gewichts-%.

Zweckmäßigerweise handelt es sich bei der Oberflächenschicht 3 hinsichtlich deren Grundmaterials um amorphes Polystyrol oder Copolymer auf Styrolbasis.

Diese Materialeien sind transparent, besitzen eine geringe Schwindungs- und Schrumpfungsneigung und sind daher besonders gut in Kombination für einen Einsatz zusammen mit TiO2-Pigmenten geeignet.

Bei dem Material des Grundkörpers 2 handelt es sich vorzugsweise um ABS (Acrylnitril-Butadien-Styrol-Copolymer), welches vorzugsweise mit TiO2-Pigmenten versetzt ist.

Zur Markierung der Oberflächenschicht 3 wird zweckmäßigerweise ein UV-Laser 5 verwendet, welcher eine Wellenlänge im Bereich von 300 nm bis 700 nm, vorzugsweise 355 nm, aufweist.

Vorzugsweise kommt ein Laser zum Einsatz, dessen Impulsdauer im Pikosekunden-Bereich liegt, beispielsweise in einem Bereich von 200 - 400 ps.

Zweckmäßigerweise liegt die Wiederholungsrate des Lasers bei mindestens 300 kHz.

Fig. 3B zeigt eine alternative Ausgestaltung der vorliegenden Erfindung. Hierbei wird vorzugsweise eine Oberflächenschicht 3 eingesetzt, die aus SAN (Styrol-Acrylnitril-Copolymer) besteht oder bei dessen Grundmaterial sich um SAN handelt. SAN ist transparent und besitzt eine hohe Brillanz. Ferner ist es sehr resistent gegen mechanische Beeinträchtigung sowie gegen eine oberflächliche Zerstörung durch das UV-Laserlicht. Zudem gewährleistet es als In-Mould-Folie eine sehr gute Verbindbarkeit mit ABS. Letzteres wird sehr häufig als Blendenmaterial für Haushaltsgeräte wie z. B. Waschmaschinen oder Geschirrspülmaschinen verwendet.

Bei der Variante sind Pigmente, vorzugsweise TiO2-Pigmente im Grundmaterial des Grundkörpers 2 fein verteilt vorgesehen. Die Oberflächenschicht 3 ist demgegenüber frei von Pigmenten und deshalb farblos. Sie kann von dem UV-Laserlicht problemlos durchstrahlt werden. Bei Bestrahlung durch das Laserlicht 4 wird der Kunststoff des Grundkörpers 3 an der Kontaktseite mit der Oberflächenschicht 3 verbrannt und bewirken dort einen Farbumschlag d. h. eine Markierung 10 in Form einer Schwarzfärbung. Die Markierung 10 liegt hierbei unterhalb der Oberflächenschicht 3. Die Oberflächenschicht 3 schützt die Markierung 10 vor mechanischer Beeinträchtigung.

Überraschenderweise hat sich gezeigt, dass hierdurch Markierungen mit besonders gutem Schwarzton mittels Bestrahlung mit UV-Laserlicht ohne Schädigung der Oberfläche erzielbar sind.

### Beispiel 1:

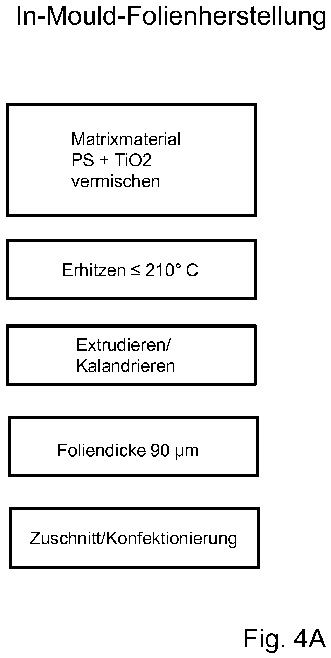

Wie in Fig. 4A dargestellt, wird zunächst das Grundmaterial für eine geeignete In-Mould-Folie bereitgestellt. Als Matrixmaterial für die In-Mould-Folie wird Polystyrol (PS) ausgewählt. Zunächst wird das Matrixmaterial (PS) mit TiO2-Pigmenten vermischt und in den Extruder eingefüllt. Zur Herstellung der In-Mould-Folie wird das Gemisch im Extruder auf eine Temperatur von unterhalb 210°C erhitzt. Das Pigment im Matrixmaterial liegt fein verteilt in dem amorphen Matrixmaterial vor. Die Konzentration des Pigments in dem Matrixmaterial beträgt zum Beispiel 1 Gewichts-%.

PS weist folgende chemische Struktur auf 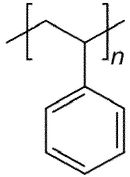 und besitzt die in Tabelle 1 aufgeführten Eigenschaften. Verwendet wird eine PS milky Folie von NORFLEX®, welche die in Tabelle 1 aufgeführten Eigenschaften besitzt.

**Tabelle 1: Eigenschaften von PS Folie**

| Eigenschaft | Einheit | Wert | Toleranz |
|---|---|---|---|
| Gesamtstärke | µm | 90 | ±10% |
| Dichte | g/cm³ | 1,05 | |
| Flächengewicht | g/cm² | 94,5 | ±10% |
| Thermische Eigenschaft | °C | -60°C bis zu +70°C; für kurze Zeit bis 100°C | |

Die In-Mould-Folie wird mit einer Foliendicke von zum Beispiel 0,09 mm (90µm) hergestellt. Anschließend wird die In-Mould-Folie zugeschnitten bzw. konfektioniert.

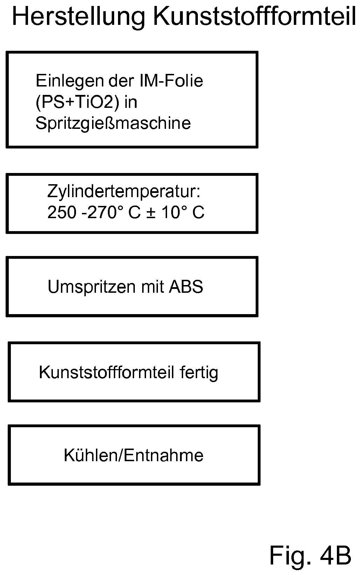

Wie es aus Fig. 4B ersichtlich ist, wird die bereitgestellte In-Mould-Folie kalt in eine Spritzgießmaschine eingelegt und bei einer Zylindertemperatur von 250-270°C +/- 10°C mit ABS, welches vorzugsweise mit einem Weißpigment, zum Beispiel TiO2-Pigmenten, versehen sein kann, umspritzt, wodurch ein ABS-Grundkörper sowie eine damit verbundene, mit TiO2 versetzten PS-In-Mould-Folie das zu markierende Kunststoffformteil, z. B. eine Blende einer Waschmaschine bilden.

ABS als Materials des Grundkörpers weist folgende chemische Struktur auf

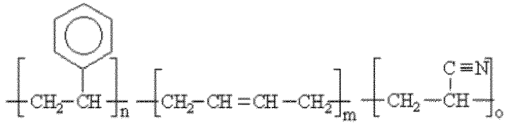

Die Eigenschaften des ABS sind in Tabelle 2 ersichtlich.

**Tabelle 2: Eigenschaften von PP als Matrixmaterial**

| Parameter | Einheit | Wert | Bedingung |
|---|---|---|---|
| Dichte | g/cm³ | 1.050 | |
| Massenfließrate (Schmelze) | cm³/10 min | 37 | 220°C, 10 kg |
| Wärmeformbeständigkeitstemperatur | °C | 97 | 0.45 MPa, ungetempert |
| Verfahrenstemperatur (Schmelze) | °C | 240 | |

Die Prozessparameter für das Umspritzen der In-Mould-Folie zur Herstellung einer Blende für eine Waschmaschine sind aus Tabelle 3 ersichtlich. Die Prozessparameter können sich abhängig von dem herzustellenden Formteil und/oder verwendeten Material ändern.

**Tabelle 3: Prozessparameter für das Umspritzen der PS In-Mould-Folie mit ABS**

| Parameter | Einheit | Wert | Toleranz |
|---|---|---|---|
| Schließkraft | kN | 3000 | ± 100 |
| Einspritzdruck | bar | 1350 | ± 50 |
| Nachdruck | bar | 450-650 | |
| Zylindertemperatur | °C | 45, 250 - 270 | ± 10 |
| Werkzeugtemperierung | °C | 65 | ± 10 |

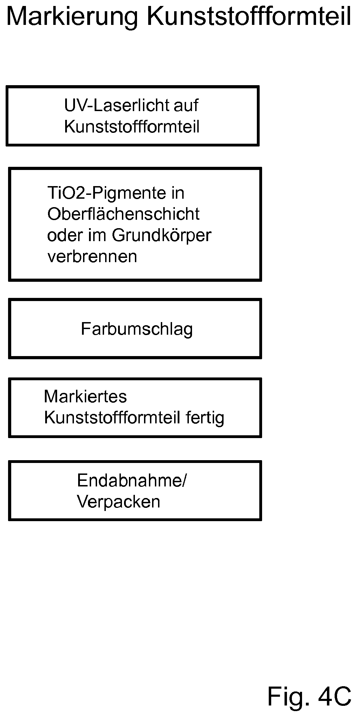

Gemäß Fig. 4C wird die farbige Markierung durch Belichtung der Oberfläche der In-Mould-Folie durch UV-Laserlicht selektiv vorgenommen (vgl. auch Fig. 3A). Durch den Energieeintrag des UV-Laserlichts wird der Kunststoff verbrannt bzw. verkohlt und bewirkt einen Farbumschlag in die schwarze Farbe. Aufgrund des Materials PS der In-Mould-Folie bleibt die Oberfläche frei von Beeinträchtigungen und gewährleistet somit eine hervorragende Oberflächengüte sowie eine hohe Resistenz vor mechanischer Beeinträchtigung.

Für die Bestrahlung mit UV-Laserlicht wurde ein Nd:YAG-Laser mit einer Wellenlänge von 355 nm, einer Pulsweite von 300ps, einer Wiederholungsrate von mindestens 300 kHz bei einer Leistung von maximal 16.5 W verwendet.

Die durch die Lasermarkierung erreichten CIELAB-Werte einer Schwarzmarkierung unter Verwendung von TiO2-Pigmenten bei einer PS-In-Mould-Folie und einem Grundkörper aus ABS sind in der nachstehenden Tabelle 4 wiedergegeben.

**Tabelle 4: CIELAB-Werte sowie Laserparameter**

| Markierung (Schwarz) | Laserleistung (W) | Overlap (DPI) | L*-Wert | a*-Wert | b*-Wert |
|---|---|---|---|---|---|
| Farbvorgabe | | | 25.33 | 0.13 | -0.16 |
| Markierung | 4.5 | 880 | 38.1 | -0.6 | -0.9 |

Bei den CIELAB-Werten handelt es sich um eine objektive Farbqualitätsfestlegung gemäß EN ISO 11664-4 (Colorimetry -- Part 4: CIE 1976 L*a*b* Farbraum). Je näher die Einzelwerte L* a* b* an den Werten der Farbvorgabe liegen, desto besser ist das erreichte Markierungsergebnis. Bei dem Overlap handelt es sich um die konstante Anzahl der überlappenden Laserbildpunkte entlang einer Länge von einem Inch in x- sowie y-Richtung.

### Beispiel 2:

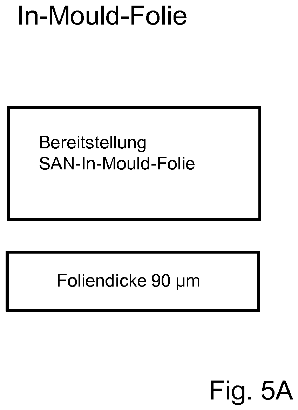

Wie in Fig. 5A dargestellt, wird zunächst das Grundmaterial für eine geeignete In-Mould-Folie bereitgestellt. Als Matrixmaterial für die In-Mould-Folie wird SAN (Styrol-Acrylnitril-Copolymer) ausgewählt. SAN weist folgende chemische Struktur auf

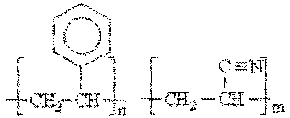

Verwendet wird eine 90 µm SAN Folie von NORFLEX®, welche die in Tabelle 5 aufgeführten Eigenschaften besitzt.

**Tabelle 5: Eigenschaften von SAN Folie**

| Eigenschaft | Einheit | Wert | Toleranz |
|---|---|---|---|
| Gesamtstärke | µm | 90 | ±10% |
| Dichte | g/cm³ | 1,08 | |
| Oberflächengewicht | g/cm² | 92.2 | ±10% |
| Thermische Eigenschaft | °C | -60°C bis zu +85°C; für kurze Zeit bis 100°C | |

Zur Herstellung der In-Mould-Folie wird das Ausgangsmaterial im Extruder auf eine Temperatur von ≤ 220°C erhitzt. Es wird eine In-Mould-Folie mit einer Foliendicke von zum Beispiel 0,09 mm (90µm) hergestellt. Anschließend wird die In-Mould-Folie zugeschnitten bzw. konfektioniert.

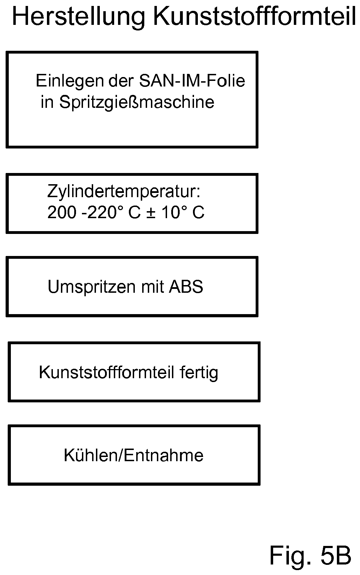

Wie es aus Fig. 5B ersichtlich ist, wird die bereitgestellte In-Mould-Folie kalt in eine Spritzgießmaschine eingelegt und bei einer Zylindertemperatur von 250 - 270°C +/- 10°C mit ABS, welches vorzugsweise mit einem Weißpigment, zum Beispiel TiO2-Pigmenten, versehen sein kann, umspritzt, wodurch ein ABS-Grundkörper sowie eine damit verbundene SAN-In-Mould-Folie das zu markierende Kunststoffformteil, z. B. eine Blende einer Waschmaschine bilden.

ABS als Materials des Grundkörpers weist folgende chemische Struktur auf

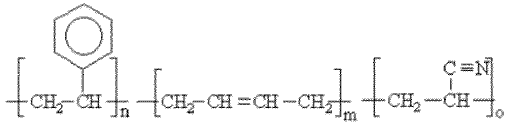

Die Eigenschaften des ABS sind in Tabelle 6 ersichtlich.

**Tabelle 6: Eigenschaften von ABS**

| Parameter | Einheit | Wert | Bedingung |
|---|---|---|---|
| Dichte | g/cm³ | 1.050 | |
| Massenfließrate (Schmelze) | cm³/10 min | 37 | 220°C, 10 kg |
| Wärmeformbeständigkeitstemperatur | °C | 97 | 0.45 MPa, ungetempert |
| Verfahrenstemperatur (Schmelze) | °C | 240 | |

Die Prozessparameter für das Umspritzen der In-Mould-Folie zur Herstellung einer Blende für eine Waschmaschine sind aus Tabelle 7 ersichtlich. Die Prozessparameter können sich abhängig von dem herzustellenden Formteil und/oder verwendeten Material ändern.

**Tabelle 7: Prozessparameter für das Umspritzen der In-Mould-Folie (SAN)**

| Parameter | Einheit | Wert | Toleranz |
|---|---|---|---|
| Schließkraft | kN | 2200 | ± 100 |
| Einspritzdruck | bar | 660 | ± 50 |
| Nachdruck | bar | 450-650 | |
| Zylindertemperatur | °C | 45, 245 - 265 | ± 10 |
| Werkzeugtemperierung | °C | 65 | ± 10 |

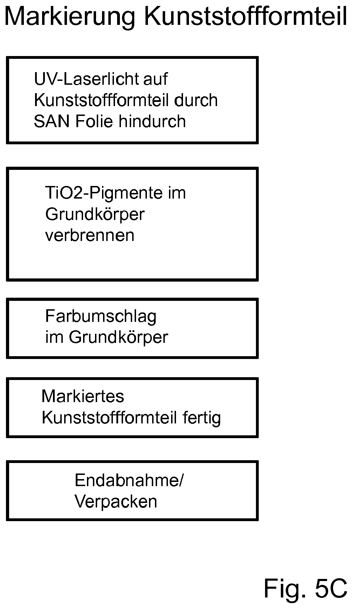

Gemäß Fig. 5C wird die Markierung durch Belichtung der Oberfläche des mit TiO2 Pigmenten versetzten Grundkörpers unterhalb der SAN-In-Mould-Folie durch UV-Laserlicht selektiv vorgenommen (vgl. Fig.3B). Durch den Energieeintrag des UV-Laserlichts durch die transparente SAN-In-Mould-Folie hindurch in den Grundkörper wird der Kunststoff des Grundkörpers verbrannt bzw. verkohlt und bewirkt einen Farbumschlag in die schwarze Farbe. Aufgrund des Materials SAN der In-Mould-Folie bleibt die Oberfläche frei von Beeinträchtigungen und gewährleistet somit eine hervorragende Oberflächengüte sowie eine hohe Resistenz vor mechanischer Beeinträchtigung. Gleichzeitig wird die Oberfläche des Kunststoffformteils durch den Energieeintrag des UV-Laserlichts nicht nachträglich beeinträchtigt.

Für die Bestrahlung mit UV-Laserlicht wurde ein Nd:YAG-Laser mit einer Wellenlänge von 355 nm, einer Pulsweite von 200 - 400ps, einer Wiederholungsrate von mindestens 300 kHz bei einer Leistung von maximal 16.5 W verwendet.

Die durch die Lasermarkierung erreichten CIELAB-Werte einer Schwarzmarkierung unter Verwendung von TiO2-Pigmenten bei einer SAN-In-Mould-Folie und einem Grundkörper aus ABS sind in der nachstehenden Tabelle 8 wiedergegeben.

**Tabelle 8: CIELAB-Werte sowie Laserparameter**

| Markierung (Schwarz) | Laserleistung (W) | Overlap (DPI) | L*-Wert | a*-Wert | b*-Wert |
|---|---|---|---|---|---|
| Farbvorgabe | | | 25.33 | 0.13 | -0.16 |
| Markierung | 4,5 | 1200 | 36.7 | 0.4 | 3.8 |

### BEZUGSZEICHENLISTE

- 1: Kunststoffformteil
- 2: Grundkörper
- 3: Oberflächenschicht
- 4: UV-Laserlicht
- 5: UV-Laser
- 6: Bedienelement
- 7: Markierung
- 8: Waschmittelfach
- 9: Dekorationsbereich
- 10: Farbumschlag

## Patentansprüche

1. Kunststoffformteil, insbesondere Spritzgießteil, mit einem Grundkörper (2) sowie einer Oberflächenschicht (3), wobei entweder der Grundkörper (2) oder die Oberflächenschicht (3) mit einer schwarzen und/oder grauen Markierung (7) versehen, ist,
wobei die Oberflächenschicht (3) als In-Mould-Folie im In-Mould-Verfahren mit dem Grundkörper (2) verbunden ist, und
(a) innerhalb des Grundmaterials der Oberflächenschicht (3) oder
(b) innerhalb des Grundmaterials des Grundkörpers (2) TiO2-Pigmente vorgesehen sind und bei selektiver Bestrahlung mit UV-Laserlicht eine die Dekoration bedingende, auf den Bereich der selektiven Bestrahlung begrenzte schwarze und/oder graue Markierung (7) durch Verbrennen oder Verkohlen des Grundmaterials der Oberflächenschicht (3) oder des Grundmaterials des Grundkörpers (2) vorliegt,
wobei das Grundmaterial der Oberflächenschicht (3) farblos oder amorph ist,
wobei es sich bei der Oberflächenschicht (3) oder zumindest beim Grundmaterial des Grundkörpers (2) um ein Copolymer auf Styrolbasis handelt.

2. Kunststoffformteil nach Anspruch 1, **dadurch gekennzeichnet, dass** eine Hauptfläche der Oberflächenschicht (3) an der Außenseite des Kunststoffformteils (1) liegt und/oder die Oberflächenschicht (3) über einem Teilbereich der außenseitigen Oberfläche des Kunststoffformteils (1) vorliegt.

3. Kunststoffformteil nach mindestens einem der vorhergehenden Ansprüche, **dadurch gekennzeichnet, dass** es sich der Oberflächenschicht (3) oder zumindest bei dessen Grundmaterial um SAN (Styrol-Acrylnitril-Copolymer) handelt.

4. Kunststoffformteil nach mindestens einem der vorhergehenden Ansprüche, **dadurch gekennzeichnet, dass** der Anteil und/oder die Partikelgröße an bzw. von Pigmenten derart festgelegt ist bzw. sind, dass die Oberflächenschicht (3) farblos, bzw. transparent, milchig oder weiß ist.

5. Kunststoffformteil nach mindestens einem der vorhergehenden Ansprüche, **dadurch gekennzeichnet, dass** der Pigmentanteil der Oberflächenschicht in Bezug auf die Folie in einem Bereich von 0,3 - 10 Gewichts-%, vorzugsweise von 0,5 - 7 Gewichts-%, besonders vorzugsweise von 1,0 Gewichts-% liegt.

6. Kunststoffformteil nach mindestens einem der vorhergehenden Ansprüche, **dadurch gekennzeichnet, dass** als Material des Grundkörpers (2) ABS (Acrylnitril-Butadien-Styrol-Copolymer) vorgesehen ist.

7. Kunststoffformteil nach mindestens einem der vorhergehenden Ansprüche , **dadurch gekennzeichnet, dass** die Oberflächenschicht (3) eine Stärke im Bereich von 0,05 mm bis 1,0 mm, vorzugsweise im Bereich von 0,05 mm bis 0,5 mm, besonders vorzugsweise im Bereich von 0,05 mm bis 0,1 mm, aufweist.

8. Verfahren zur Herstellung einer schwarzen und/oder grauen Markierung eines Kunststoffformteils, insbesondere eines Spritzgießteils, welches einen Grundkörper (2) sowie eine mit einer auf einen selektiven Bereich begrenzte schwarze und/oder graue Markierung (7) versehene Oberflächenschicht (3) aufweist, vorzugsweise eines Kunststoffformteils nach einem der vorhergehenden Ansprüche, mit folgenden Verfahrensschritten:
(a) Bereitstellen einer ein Grundmaterial umfassenden Oberflächenschicht (3), wobei es sich bei der Oberflächenschicht um eine In-Mould-Folie handelt innerhalb deren Grundmaterials TiO2-Pigmente fein verteilt vorliegen und es sich bei dessen Grundmaterial um ein Copolymer auf Styrolbasis handelt,
(b) Umspritzen der Oberflächenschicht (3) mit Kunststoff im In-Mould-Verfahren zu einem Kunststoffformteil, wobei das Kunststoffformteil einen Grundkörper (2) sowie die Oberflächenschicht (3) umfasst und die Oberflächenschicht (3) sich mit ihrer einen Hauptfläche an oder in der Nähe der Oberfläche des Grundkörpers (2) befindet,
(c) selektive Bestrahlung des Kunststoffformteil im Bereich der Oberflächenschicht (3) mit UV-Laserlicht,
(d) Verbrennen oder Verkohlen des Kunststoffs im Bestrahlungsbereich des Grundmaterials der Oberflächenschicht (3), wodurch die schwarze und/oder graue Markierung (7) entsteht.

9. Verfahren zur Herstellung einer schwarzen und/oder grauen Markierung eines Kunststoffformteils, insbesondere eines Spritzgießteils, welches eine Oberflächenschicht (3) sowie einen Grundkörper (2) aufweist und der Grundkörper mit einer auf einen selektiven Bereich begrenzten schwarzen und/oder grauen Markierung (7) versehenen ist, vorzugsweise eines Kunststoffformteils nach einem der vorhergehenden Ansprüche 1 - 7, mit folgenden Verfahrensschritten:
(a) Bereitstellen einer ein Grundmaterial umfassenden Oberflächenschicht (3), wobei es sich bei der Oberflächenschicht um eine In-Mould-Folie und es sich bei dessen Grundmaterial um ein Copolymer auf Styrolbasis handelt,
(b) Umspritzen der Oberflächenschicht (3) mit Kunststoff, wobei innerhalb des Grundmaterials des Kunststoffs TiO2-Pigmente fein verteilt vorliegen, im In-Mould-Verfahren zu einem Kunststoffformteil, wobei das Kunststoffformteil einen Grundkörper (2) sowie die Oberflächenschicht (3) umfasst und die Oberflächenschicht (3) sich mit ihrer einen Hauptfläche an oder in der Nähe der Oberfläche des Grundkörpers (2) befindet,
(c) selektive Bestrahlung des Grundkörpers (2) durch die Oberflächenschicht (3) hindurch mit UV-Laserlicht,
(d) Verbrennen oder Verkohlen des Grundmaterials des Grundkörpers (2), wodurch die schwarze und/oder graue Markierung (7) im Grundkörper (2) entsteht.

10. Verfahren nach Anspruch 9, **dadurch gekennzeichnet, dass** es sich bei der Oberflächenschicht (3) oder zumindest bei dessen Grundmaterial um SAN (Styrol-Acrylnitril-Copolymer) handelt.

11. Verfahren nach Anspruch 8 oder 9, **dadurch gekennzeichnet, dass** ein UV-Laser (5) mit einer Wellenlänge von 355 nm verwendet wird.

## Claims

1. Plastic moulded part, in particular injection-moulded part, with a main body (2) and a surface layer (3), either the main body (2) or the surface layer (3) being provided with a black and/or grey marking (7), wherein the surface layer (3) is connected to the main body (2) as an in-mould film by the in-mould method, and
(a) within the base material of the surface layer (3) or
(b) within the base material of the main body (2) TiO2 pigments are provided and, under selective irradiation with UV laser light, a black and/or grey marking (7) determining the decoration and restricted to the region of the selective irradiation is obtained by burning or charring the base material of the surface layer (3) or the base material of the main body (2),
wherein the base material of the surface layer (3) is colourless or amorphous,
wherein the surface layer (3), or at least the base material of the main body (2), is a styrene-based copolymer.

2. Plastic moulded part according to Claim 1, **characterized in that** a main area of the surface layer (3) lies on the outer side of the plastic moulded part (1) and/or the surface layer (3) is present over a partial region of the outer surface of the plastic moulded part (1).

3. Plastic moulded part according to at least one of the preceding claims, **characterized in that** the surface layer (3), or at least its base material, is an SAN (styrene-acrylonitrile copolymer).

4. Plastic moulded part according to at least one of the preceding claims, **characterized in that** the proportion and/or the particle size of pigments is or are fixed in such a way that the surface layer (3) is colourless, or transparent, opaque or white.

5. Plastic moulded part according to at least one of the preceding claims, **characterized in that** the proportion of pigments of the surface layer with respect to the film lies in a range of 0.3-10% by weight, preferably of 0.5-7% by weight, particularly preferably of 1.0% by weight.

6. Plastic moulded part according to at least one of the preceding claims, **characterized in that** an ABS (acrylonitrile-butadiene-styrene copolymer) is provided as the material of the main body (2).

7. Plastic moulded part according to at least one of the preceding claims, **characterized in that** the surface layer (3) has a thickness in the range of 0.05 mm to 1.0 mm, preferably in the range of 0.05 mm to 0.5 mm, particularly preferably in the range of 0.05 mm to 0.1 mm.

8. Method for producing a black and/or grey marking of a plastic moulded part, in particular an injection-moulded part, which has a main body (2) and a surface layer (3) provided with a black and/or grey marking (7) restricted to a selective region, preferably a plastic moulded part according to one of the preceding claims, with the following method steps:
(a) providing a surface layer (3) comprising a base material, the surface layer being an in-mould film within the base material of which TiO2 pigments are present in a finely distributed form and the base material of which is a styrene-based copolymer,
(b) encapsulating the surface layer (3) in plastic by the in-mould method to form a plastic moulded part, the plastic moulded part comprising a main body (2) and the surface layer (3), and the surface layer (3) being located with its one main area on or in the vicinity of the surface of the main body (2),
(c) selective irradiation of the plastic moulded part in the region of the surface layer (3) with UV laser light,
(d) burning or charring of the plastic in the irradiating region of the base material of the surface layer (3), whereby the black and/or grey marking (7) is produced.

9. Method for producing a black and/or grey marking of a plastic moulded part, in particular an injection-moulded part, which has a surface layer (3) and a main body (2) and the main body is provided with a black and/or grey marking (7) restricted to a selective region, preferably a plastic moulded part according to one of the preceding Claims 1-7, with the following method steps:
(a) providing a surface layer (3) comprising a base material, the surface layer being an in-mould film and its base material being a styrene-based copolymer,
(b) encapsulating the surface layer (3) in plastic, TiO2 pigments being present in a finely distributed form within the base material of the plastic, by the in-mould method to form a plastic moulded part, the plastic moulded part comprising a main body (2) and the surface layer (3), and the surface layer (3) being located with its one main area on or in the vicinity of the surface of the main body (2),
(c) selective irradiation of the main body (2) through the surface layer (3) with UV laser light,
(d) burning or charring of the base material of the main body (2), whereby the black and/or grey marking (7) is produced in the main body (2).

10. Method according to Claim 9, **characterized in that** the surface layer (3), or at least its base material, is an SAN (styrene-acrylonitrile copolymer).

11. Method according to Claim 8 or 9, **characterized in that** a UV laser (5) with a wavelength of 355 nm is used.

## Revendications

1. Pièce moulée en matière plastique, notamment pièce moulée par injection, comprenant un corps de base (2) ainsi qu'une couche de surface (3), le corps de base (2) ou la couche de surface (3) étant pourvu(e) d'un marquage (7) noir et/ou gris,
la couche de surface (3) étant liée au corps de base (2) en tant que film en moule dans un procédé en moule, et des pigments de TiO2 se trouvant
(a) à l'intérieur du matériau de base de la couche de surface (3) ou
(b) à l'intérieur du matériau de base du corps de base (2)
et lors d'une irradiation sélective avec de la lumière laser UV, un marquage (7) noir et/ou gris conditionnant la décoration, limité à la zone de l'irradiation sélective, étant présent par combustion ou carbonisation du matériau de base de la couche de surface (3) ou du matériau de base du corps de base (2),
le matériau de base de la couche de surface (3) étant incolore ou amorphe,
la couche de surface (3) ou au moins le matériau de base du corps de base (2) étant un copolymère à base de styrol.

2. Pièce moulée en matière plastique selon la revendication 1, **caractérisée en ce qu'**une surface principale de la couche de surface (3) se trouve au niveau du côté extérieur de la pièce moulée en matière plastique (1) et/ou la couche de surface (3) est présente sur une zone partielle de la surface côté extérieur de la pièce moulée en matière plastique (1).

3. Pièce moulée en matière plastique selon au moins l'une des revendications précédentes, **caractérisée en ce que** la couche de surface (3) ou au moins son matériau de base est du SAN (copolymère styrène-acrylonitrile).

4. Pièce moulée en matière plastique selon au moins l'une des revendications précédentes, **caractérisée en ce que** la part et/ou la taille des particules des pigments est fixée de telle sorte que la couche de surface (3) est incolore ou transparente, laiteuse ou blanche.

5. Pièce moulée en matière plastique selon au moins l'une des revendications précédentes, **caractérisée en ce que** la part des pigments de la couche de surface en référence au film est comprise dans une plage de 0,3 à 10 % massiques, de préférence de 0,5 à 7 % massiques, notamment de préférence égale à 1 % massique.

6. Pièce moulée en matière plastique selon au moins l'une des revendications précédentes, **caractérisée en ce que** le matériau prévu du corps de base (2) est de l'ABS (copolymère acrylonitrile butadiène styrène).

7. Pièce moulée en matière plastique selon au moins l'une des revendications précédentes, **caractérisée en ce que** la couche de surface (3) présente une épaisseur dans la plage de 0,05 mm à 1,0 mm, de préférence dans la plage de 0,05 mm à 0,5 mm, notamment de préférence dans la plage de 0,05 mm à 0,1 mm.

8. Procédé de fabrication d'un marquage noir et/ou gris d'une pièce moulée en matière plastique, notamment d'une pièce moulée par injection, laquelle possède un corps de base (2) ainsi qu'une couche de surface (3) pourvue d'un marquage (7) noir et/ou gris limité à une zone sélective, de préférence une pièce moulée en matière plastique selon l'une des revendications précédentes, comprenant les étapes suivantes :
(a) fourniture d'une couche de surface (3) comprenant un matériau de base, la couche de surface étant un film en moule à l'intérieur du matériau de base duquel se trouvent des pigments de TiO2 finement répartis et son matériau de base étant un copolymère à base de styrol,
(b) enrobage de la couche de surface (3) avec une matière plastique dans un procédé en moule en vue d'obtenir une pièce moulée en matière plastique, la pièce moulée en matière plastique comportant un corps de base (2) ainsi que la couche de surface (3) et la couche de surface (3) se trouvant, avec l'une de ses surfaces principales, au niveau ou à proximité de la surface du corps de base (2),
(c) irradiation sélective de la pièce moulée en matière plastique dans la région de la couche de surface (3) avec de la lumière laser UV,
(d) combustion ou carbonisation de la matière plastique dans la zone d'irradiation du matériau de base de la couche de surface (3), moyennant quoi le marquage (7) noir et/ou gris se produit.

9. Procédé de fabrication d'un marquage noir et/ou gris d'une pièce moulée en matière plastique, notamment d'une pièce moulée par injection, laquelle possède une couche de surface (3) ainsi qu'un corps de base (2) et le corps de base est pourvu d'un marquage (7) noir et/ou gris limité à une zone sélective, de préférence une pièce moulée en matière plastique selon l'une des revendications 1 à 7, comprenant les étapes suivantes :
(a) fourniture d'une couche de surface (3) comprenant un matériau de base, la couche de surface étant un film en moule et son matériau de base étant un copolymère à base de styrol,
(b) enrobage de la couche de surface (3) avec une matière plastique, des pigments de TiO2 finement répartis se trouvant à l'intérieur du matériau de base de la matière plastique, dans un procédé en moule en vue d'obtenir une pièce moulée en matière plastique, la pièce moulée en matière plastique comportant un corps de base (2) ainsi que la couche de surface (3) et la couche de surface (3) se trouvant, avec l'une de ses surfaces principales, au niveau ou à proximité de la surface du corps de base (2),
(c) irradiation sélective du corps de base (2) à travers la couche de surface (3) avec de la lumière laser UV,
(d) combustion ou carbonisation du matériau de base du corps de base (2), moyennant quoi le marquage (7) noir et/ou gris se produit.

10. Procédé selon la revendication 9, **caractérisé en ce que** la couche de surface (3) ou au moins son matériau de base est du SAN (copolymère styrène-acrylonitrile).

11. Procédé selon la revendication 8 ou 9, **caractérisé en ce qu'**un laser UV (5) ayant une longueur d'onde de 355 nm est utilisé.
